# EUROPEAN PATENT APPLICATION

(11) **EP 1 821 581 A2**
(43) Date of publication of application: **22.08.2007**
(21) Application number: 07250529.0
(22) Date of filing: 09.02.2007
(51) Int. Cl.: H05B 37/02

(54) **Light COntrol Fluorescent lamp and circuit thereof**

(30) Priority: 21.02.2006 CN 200610009296
(71) Applicant: Mass Technology (H.K.) Ltd., Kowloon, Hong Kong (CN)
(72) Inventor: Foo, Onn Fah, Tsimshatsui, Kowloon, HONG KONG (CN)
(74) Representative: Prentice, Raymond Roy

(57) **Abstract**

A light control circuit for use in light control fluorescent lamps comprises a filter and rectifier circuit (1), a frequency control and resonant circuit (2) and an ambient brightness signal sampling and control circuit (4); wherein the ambient brightness signal sampling and control circuit (4) advantageously adopts an integrated circuit (IC2) to control or adjust light sensitivity of the light control circuit in an accurate manner and to control the on/off status of the light control circuit in an intelligent way such that the output of the light control circuit is not susceptible to a sudden change of the ambient brightness.

## Description

The present invention relates to a light control fluorescent lamp, and more particularly to a compact type fluorescent lamp which can be automatically turned on and off in accordance with the brightness of the external environment and a light control circuit integrated therewith.

Environment conservation and energy saving are matters of increasing concern to the public, wherein the reduction of electric lighting energy is particularly of economical value and practical to implement. To this end, various energy saving light control lamps or switches have been developed, for example, CN 87201531 disclosed an energy saving light switch wherein its light control assembly comprise a transformer and a photoresistor. CN 87213593 disclosed a light control lamp which is switched on and off by means of a photoresistor and a thyristor. However, both of which are only adapted for use with incandescent lamps.

CN 91216850 disclosed an energy saving light control fluorescent lamp comprising a base, a light control PCB and a transparent cover, wherein its light control circuit comprises a light control switch circuit, a power drive circuit and a load circuit connected in series connection. The light control switch circuit comprises a photosensitive semiconductor diode, resistors and capacitors connected in series connection. The power drive circuit comprises a capacitor connected across the collector and emitter terminals of a high voltage transistor. The load circuit comprises a resistor being in parallel connection with a lamp tube and another resistor being in serial connection with the paralleled pair. Such a light control lamp requires a special photosensitive diode to execute on/off operation under a specific ambient brightness and also a high voltage capacitor and transistor which are relatively costly. Further, the sized transparent cover must be cleaned up frequently for maintaining the proper operation thereof. In addition, the perception of brightness and darkness differs in various applications and there are also different standards or requirements to the photosensitivity such that the light control lamp of the prior art cannot be widely used in different circumstances as the photosensitivity thereof cannot be adaptively controlled or adjusted as requested. Further, a lamp tube is more and more commonly replaced by a compact type fluorescent lamp having a very limited space for installation, such that the light control lamp cannot be adapted for use therewith in view of its dimension and other factors, such as the parts being employed therein or the like. Further, such and other light control lamps are also susceptible to a sudden change of the ambient brightness, for example, such a light control lamp might repeatedly turn off and on under the influence of a sudden and rapid change of the brightness of the external environment while it is amid lightning or being directly irradiated for a short duration by a very strong external light source, such as a head light of a vehicle passed by at night.

An aim of the present invention is to provide a light control fluorescent lamp and a light control circuit, particularly a compact type light control fluorescent lamp embedded with a light control circuit wherein the light sensitivity thereof should be easily controlled or adjusted thereby rendering it not to be susceptible to a sudden change of the ambient brightness and thus could be adapted for use in various circumstances.

Accordingly, the technical solution of the present invention provided for the above object being a light control fluorescent lamp as well as its circuit, particularly a compact type light control fluorescent lamp and an intelligent light control circuit integrated therewith, by which the light sensitivity thereof can be controlled easily thereby rendering it not to be susceptible to a sudden change of the ambient brightness. The light control circuit comprises a filter and rectifier circuit coupled to an AC power supply; a frequency control and resonant circuit with its input coupled to an output of the filter and rectifier circuit; an ambient brightness signal sampling and control circuit with its input coupled to the output of the filter and rectifier circuit while its output being coupled to the frequency control and resonant circuit for controlling an output of the same thereby controlling the on/off status of the light control circuit, characterized in that the ambient brightness signal sampling and control circuit advantageously adopts an integrated circuit to control or adjust light sensitivity of the light control circuit in an accurate manner and to control the on/off status of the light control circuit in an intelligent way such that the output of the light control circuit is not susceptible to a sudden change of the ambient brightness.

According to a preferred embodiment of the present invention, the ambient brightness signal sampling and control circuit comprises a programmable integrated circuit and a plurality of resistors, a photoresistor, a zener diode, a plurality of capacitors and a transistor coupled correspondingly to respective pins of the programmable integrated circuit. Preferably, the programmable integrated circuit is a PIC12F510, PIC12F675, PIC10F220, PIC10F222 or any other more advanced or functionally equivalent integrated circuit. Alternatively, the transistor is a MOSFET.

Preferably, the ambient brightness signal sampling and control circuit according to a preferred embodiment of the present invention is configured to continuously detect the ambient brightness in a predetermined interval and then selectively operates in three different modes including turnon, intermediate and turnoff modes based on detected value thereby controlling the on/off status of the light control circuit correspondingly. Preferably, once the light control circuit being coupled to the power supply, it will go through a response lag of 1-10 seconds during which the ambient brightness is detected, analyzed and determined for enabling the on/off status of the light control circuit to be controlled correspondingly.

Preferably, the ambient brightness signal sampling and control circuit is configured to operate in the turnon mode or intermediate mode thereby rendering the light control circuit to be turned on or remained on while the ambient brightness being remained under a lower level for a specific duration. Similarly, the ambient brightness signal sampling and control circuit is configured to operate in the turnoff mode or intermediate mode thereby rendering the light control circuit to be turned off or remained off while the ambient brightness being remained above an upper level for a specific duration. Preferably, the specific duration ranges from 3 to 30 seconds and can be adjusted as required. Preferably, the ambient brightness signal sampling and control circuit is configured to keep the latest working mode of the light control circuit unchanged while operating in the intermediate mode such that a smooth and stable operation of which can be maintained.

According to the preferred embodiments of the present invention, a light control fluorescent lamp and more particularly a compact type light control fluorescent lamp having an easily adjustable light sensitivity and being not susceptible to a sudden change of the ambient brightness can be realized by means of a light control circuit of the foregoing type. While it is simple in construction, stable in performance and small in size in view of the electronic devices used therewith, thereby it can be alternatively integrated with a fluorescent lamp, particularly a compact type fluorescent lamp.

Further aims, features, characteristics and effects of the present invention will be illustrated in more detail by way of example with reference to the drawings in which:-
Figure 1 is a block diagram of a light control circuit of a light control fluorescent lamp according to a preferred embodiment of the present invention;
Figure 2 is a circuit diagram of an ambient brightness signal sampling and control circuit of a light control circuit according to a preferred embodiment of the present invention; and
Figure 3 is a circuit diagram of a light control fluorescent lamp according to a preferred embodiment of the present invention.

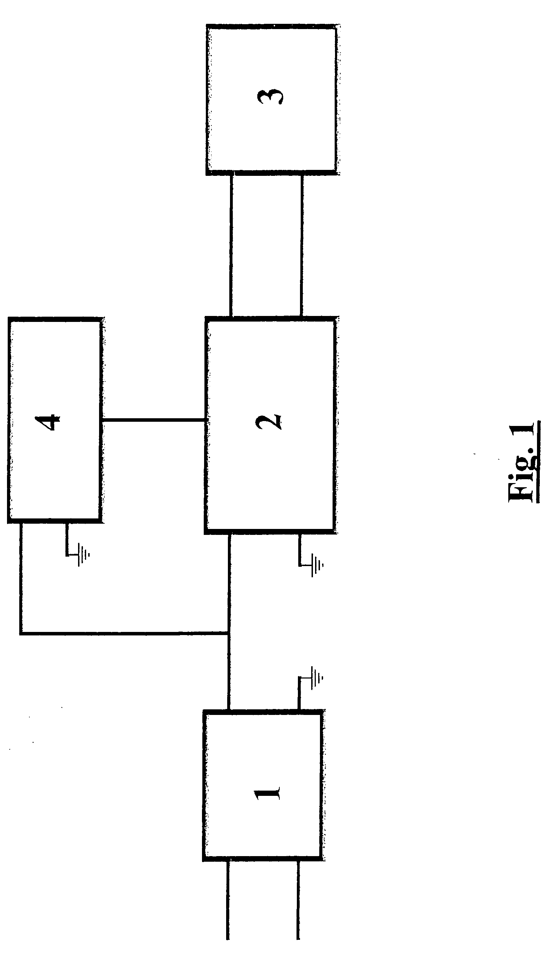

Referring to Fig. 1, which illustrates a block diagram of a light control circuit for use in a light control fluorescent lamp according to a preferred embodiment of the present invention. The light control circuit comprises a filter and rectifier circuit 1 coupled to an AC power supply; a frequency control and resonant circuit 2 with its input coupled to an output of the filter and rectifier circuit; an ambient brightness signal sampling and control circuit 4 with its input coupled to the output of the filter and rectifier circuit while its output being coupled to the frequency control and resonant circuit for controlling an output of the same thereby controlling correspondingly the on/off status of the light control circuit. Accordingly, such a configuration enables the control or adjustment of light sensitivity of the light control circuit in an accurate manner and automatic turnon and turnoff operations of a fluorescent lamp in a lamp load circuit 3 electrically coupled to the output of the frequency control and resonant circuit.

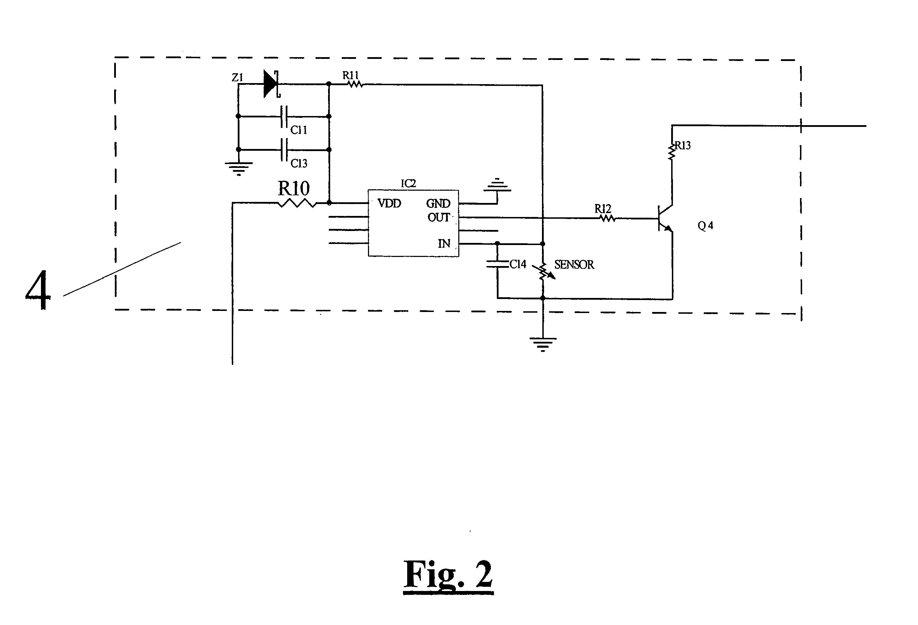

Referring to Fig. 2, which illustrates a circuit diagram of an ambient brightness signal sampling and control circuit 4 of a light control circuit according to a preferred embodiment of the present invention. The ambient brightness signal sampling and control circuit 4 comprises a programmable integrated circuit IC2 and its external circuits and implementing devices. The programmable integrated circuit IC2 having its GND connected to earth, capacitors C11, C 13 and a zener diode Z1 being connected in parallel between its VDD and GND, wherein the positive terminal of the zener diode Z1 is connected to earth; a resistor R10 having its one end connected to VDD and its another end connected to an output of a filter and rectifier circuit; a resistor R11 is connected between the VDD and IN pins of the IC2; a capacitor C14 and a photoresistor SENSOR is connected in parallel between the IN and the earth; a resistor R12 having its one end connected to OUT of the IC2 and its another end connected to the base (or the gate) of a transistor Q4; the emitter (or the source) of the transistor Q4 is earthed; a resistor R13 having its one end connected to the collector (or the drain) of the transistor Q4 and its another end acted as a control end being connected to a control point in the frequency control and resonant circuit 2.

Alternatively, the programmable integrated circuit IC2 can be a PIC12F510, PIC12F675, PIC10F220, PIC10F222 or any other functionally equivalent integrated circuit or the like. While a PIC12F510 or PIC 12F675 is employed as the programmable integrated circuit IC2, VDD will be the pin 1 of the IC2, GND will be pin 8 and OUT can be selectively assigned to any one of pins 2, 3, 5, 6 and 7. The IN of a PIC12F510 can be assigned to any one of pins 5, 6 and 7, and the IN of a PIC12F675 can be assigned to any one of pins 3, 5, 6 and 7. While a PIC10F220 or PIC10F222 is employed as the programmable integrated circuit IC2, VDD will be the pin 5 of the IC2, GND will be pin 2 and OUT can be selectively assigned to any one of pins 1, 3, and 4, and IN can be assigned to either pin 1 or 3. Definitely, the OUT and IN shall be two different pins and cannot be assigned to the same pin. Further, the assignments of VDD, GND, IN, OUT can be adaptively amended or changed in accordance with the respective models of integrated circuits while a specific or different model of integrated circuit being selected for use as the programmable integrated circuit IC2.

The ambient brightness signal sampling and control circuit 4 is mainly used to provide a corresponding DC voltage signal to the programmable integrated circuit IC2 in accordance with the brightness of the external environment. To this end, it employs the photosensitivity of the photoresistor SENSOR of which the resistance is in inverse proportion to the brightness of the external environment, such that the resistance of the photoresistor will descend thereby rendering the voltage level at the IN of the programmable integrated circuit IC2 correspondingly descends from high to medium and then to low when the brightness of the external environment changes from dark to bright. With a specific program being input into the programmable integrated circuit IC2, the voltage level at the IN relative to the ambient brightness can be continuously detected such that IC2 can selectively operate in turnon, intermediate or turnoff modes based on the detected value. Wherein the specific program can respectively define a lower and an upper threshold representing preferred boundaries of the ambient brightness and both of which can be predetermined and easily adjusted as required. While the detected ambient brightness is kept below the lower threshold or above the upper threshold for a specific duration, and in particular the voltage level at the IN being persistently higher or lower than a specific value, then the programmable integrated circuit IC2 output accordingly a control voltage to the transistor Q4 to enable it to be on or off thereby generating a control signal which will be subsequently sent to a control point of the frequency control and resonant circuit 2 to perform eventually the on/off operation of the lamp load circuit 3. When the detected ambient brightness is kept between the lower threshold and the upper threshold for the specific duration, then the programmable integrated circuit IC2 will operate in an intermediate mode during which the voltage level of IN will be detected as usual and the control voltage at OUT remains unchanged.

Once coupled to a power supply, the OUT of the programmable integrated circuit IC2 will persistently stay HIGH for a duration (can be 1-10 seconds) during which the voltage level of IN will be detected for a single or multiple times. The OUT will change to LOW to eventually switch on the lamp only when the IN of IC2 is persistently kept at HIGH or else the OUT stays HIGH and the lamp remains off.

In operation, the ambient brightness is continuously detected and determined for a single or multiple times in a predetermined interval (can be 3-30 seconds), if the detected value stays below the lower threshold, namely the IN of the programmable integrated circuit IC2 persistently stays HIGH. After going through a proper time delay, the OUT will output a LOW to turn off the transistor Q4 and thus the lamp is switched on.

Similarly, if the detected value stays above the upper threshold for a predetermined interval (can be 3-30 seconds), namely the IN of the programmable integrated circuit IC2 persistently stays LOW. After passing through a proper time delay, the OUT will output a HIGH to turn on the transistor Q4 and thus the lamp is switched off. If the detected level of IN is found not at LOW for at least once during the detection process, the entire process will be restarted for ensuring that the ambient brightness signal sampling and control circuit 4 is not susceptible to a sudden change of the ambient brightness.

While the IN of the programmable integrated circuit IC2 persistently stays at intermediate level, namely the ambient brightness is continuously detected and found as in between the upper and the lower thresholds, the output voltage of OUT remains unchanged whereby the latest operating mode of the lamp will also remain unchanged.

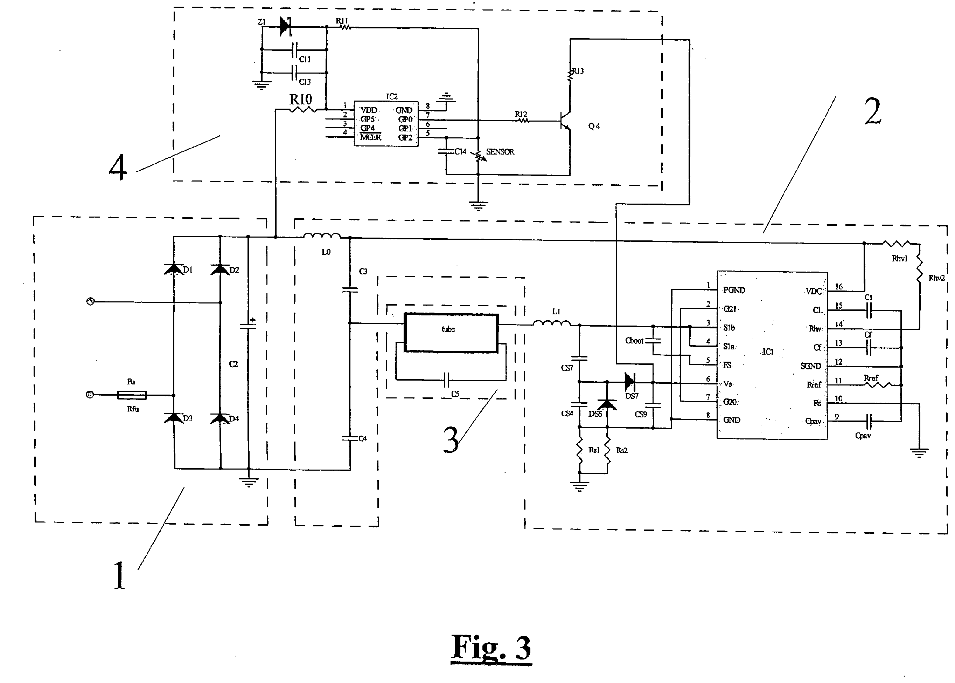

Referring to Fig. 3, a circuit diagram of a light control fluorescent lamp according to a preferred embodiment of the present invention is illustrated wherein the light control fluorescent lamp comprises a filter and rectifier circuit 1, a frequency control and resonant circuit 2, an ambient brightness signal sampling and control circuit 4 and a lamp load circuit 3.

The filter and rectifier circuit 1 is a well-known circuit capable of converting an ac input into a dc input, which having its output coupled to an input of the frequency control and resonant circuit 2 of which an output is in turn coupled to the lamp load circuit 3.

The frequency control and resonant circuit 2 comprises an integrated circuit IC1 having a frequency control circuit and a MOSFET and its external circuits. The integrated circuit IC1 having its pin 1 connected with pin 8, pin 2 connected with pin 7, pin 3 connected with pin 4, and pin 10 connected to earth, respectively. A capacitor Cboot is connected across (i.e. connected in parallel manner with) pins 3 and 5 whereby the voltage at pin 5 can be changed correspondingly with the pin 3.
A capacitor C1 is connected across pins 12 and 15 for stabilization of the frequency fluctuation. A capacitor Cf is connected across pins 12 and 13, and a resistor Rref is connected across pins 12 and 11, wherein the resonance frequency is governed by both the capacitor Cf and the resistor Rref. A capacitor Cpav is connected across pins 12 and 9 for determination of the preheating time. Resistors Rhv1 and Rhv2 are serially connected across pins 14 and 16 for the provision of the initial voltage source to the IC1. Resistors Rs1 and Rs2 are connected in parallel in between pins 8 and 10 (earth) to limit the maximum current of the MOSFET. A capacitor CS9 is connected across pins 6 and 8 for providing a stable operating voltage to IC1; a diode DS6 is connected in parallel with a capacitor CS4, and the positive terminal of the diode DS6 is connected to pin 8 while its negative terminal is connected with one end of a capacitor CS7 having its other end connected to pin 3. The positive terminal of a diode DS7 is connected with the negative terminal of the diode DS6 while the negative terminal of the diode DS7 is connected to pin 6. The portion of the circuit composed of the capacitors CS7, CS4 and diodes DS6, DS7 being used to act as the operating voltage source for IC1. Further, the capacitor CS7 is employed for the adjustment of the rise and fall time of the MOSFET. A choke inductor L1 has its one end connected to pin 3 and another end connected to the lamp load circuit 3 as an output end. Two capacitor C3 and C4 are serially connected across pins 16 and 10, wherein a junction of capacitors C3 and C4 acts as another output end in connection with the lamp load circuit 3, where the capacitors C3 and C4 can be used for dc blocking. A filter inductor L0 has one end connected to pin 16 and another end connected to the output of the filter and rectifier circuit 1 so as to filter out the high frequency harmonic.

The lamp load circuit 3 comprises a fluorescent lamp having two connection points at both ends, wherein the frequency control and resonant circuit 2 is connected across one point respectively at both ends, and a capacitor C5 in parallel connection with the fluorescent lamp is connected across another pair of connection points.

Similar to Fig. 2, the ambient brightness signal sampling and control circuit 4 as shown in Fig. 3 comprises a programmable integrated circuit IC2 and its external circuits and implementing devices. According to this embodiment of the present invention, the programmable integrated circuit IC2 is preferably a PIC12F510 or a PIC12F675, wherein VDD is pin 1 of the IC2, while GND is pin 8, OUT is pin 7 and IN is pin 5, respectively.

According to this embodiment of the present invention, once the light control fluorescent lamp is coupled to a power supply, the OUT of the programmable integrated circuit IC2 will first output a high voltage level for a duration, for example 4 seconds, during which the voltage level of IN will be detected for multiple times. The OUT will output a low voltage level to switch on the fluorescent lamp only when the IN of IC2 is persistently kept at high voltage level or else the OUT stays at high voltage level and the fluorescent lamp remains off when the IN is kept at intermediate or low voltage level.

In the case that the ambient brightness stays below the lower threshold for a predetermined interval, such as 10 seconds, namely the IN of the programmable integrated circuit IC2 persistently stays HIGH. The OUT will output a LOW to turn off the transistor Q4 thereby the frequency control and resonant circuit 2 will work normally and the lamp is eventually switched on.

Similarly, in case of the ambient brightness is detected and determined in a frequency of once per every 1.5 seconds within a predetermined interval, such as 15 seconds, and all the detected values stay above the upper threshold, namely the IN of the programmable integrated circuit IC2 persistently stays LOW. The OUT of IC2 will output a HIGH to turn on the transistor Q4 thereby rendering the voltage of a control point in the frequency control and resonant circuit 2 to descend and thus the frequency control and resonant circuit 2 will eventually cease operation and the fluorescent lamp is then switched off. If the detected level of IN is found not at LOW for at least once during the detection process, the entire process will be restarted for ensuring that the ambient brightness signal sampling and control circuit 4 is not susceptible to a sudden change of the ambient brightness.

In case the IN of the programmable integrated circuit IC2 persistently stays at medium level, namely the ambient brightness is continuously found to be between the upper and the lower thresholds, the output voltage of OUT remains unchanged whereby the operating mode of the lamp will also remain unchanged.

It should be obvious that the ambient brightness signal sampling and control circuit 4 of the present invention is characterized by featuring an integrated circuit for performing calculation and a transistor Q4 for controlling the on/off operation. As these devices are relatively small in size they enable the light control circuit and light control fluorescent lamp to be simple in construction, reliable in operation and preferably adapted for use as a compact type fluorescent lamp. Further, the programmable integrated circuit IC2 can be programmed as requested such that the photosensitivity thereof can be easily controlled or adjusted in an accurate manner for adaption to various applications by changing the operation modes with the adjustment of certain parameters and definitions of the software contained therein, whereby the lamp can be automatically turned on and off in an intelligent way and not to be susceptible to a sudden change of the ambient brightness. In this regard, the present invention allows an extended life span of the lamp and a saving of power consumption, and thus would further have a greater economic effect. It should be noted that it is applicable to control or adjust the photosensitivity and/or operation modes thereof in post manufacturing stages of the lamp by virtue of the use of a programmable integrated circuit.

While the invention has been described with reference to the above preferred embodiments, it will be understood by those skilled in the art that various changes, additions or deletions may be made and equivalents may be substituted for elements thereof without departing from the scope of the invention. The above embodiments are merely exemplary but not limitative examples of the present invention. For example, the circuitry of the ambient brightness signal sampling and control circuit 4 will differ and may need adaptive modification when a different model of IC is employed as the programmable integrated circuit IC2. The frequency control and resonant circuit 2 can also adopt any other circuitry having a controllable point or junction, and all such alteration and/or modification shall fall within the scope of the present invention.

## Claims

1. A light control circuit for use in light control fluorescent lamps comprising:
a filter and rectifier circuit (1) coupled to an AC power supply;
a frequency control and resonant circuit (2) with its input coupled to an output of the filter and rectifier circuit;
an ambient brightness signal sampling and control circuit (4) with its input coupled to the output of the filter and rectifier circuit and its output coupled to the frequency control and resonant circuit for controlling an output of the same thereby controlling the on/off status of the light control circuit, **characterized in that** the ambient brightness signal sampling and control circuit (4) adopts an integrated circuit to control or adjust light sensitivity of the light control circuit in an accurate manner and to control the on/off status of the light control circuit in an intelligent way such that the output of the light control circuit is not susceptible to a sudden change of the ambient brightness.

2. A light control circuit as claimed in claim 1, wherein the ambient brightness signal sampling and control circuit (4) comprises a programmable integrated circuit (IC2) and a plurality of resistors (R10, R11, R12, R13), a photoresistor (SENSOR), a zener diode (Z1), a plurality of capacitors (C11, C13, C14) and a transistor(Q4) coupled correspondingly to respective pins of the programmable integrated circuit (IC2).

3. A light control circuit as claimed in claim 2, wherein the programmable integrated circuit (IC2) is a PIC12F510, PIC12F675, PIC10F220, PIC10F222 or any other functionally equivalent integrated circuit.

4. A light control circuit as claimed in claim 2 or claim 3, wherein the transistor (Q4) is a crystal triode or a MOSFET.

5. A light control circuit as claimed in any one of the preceding claims, wherein the ambient brightness signal sampling and control circuit (4) is configured to continuously detect the ambient brightness for a single or multiple times in a predetermined interval and then selectively operates in turnon, intermediate or turnoff modes based on detected brightness thereby controlling the on/off status of the light control circuit correspondingly.

6. A light control circuit as claimed in any one of the preceding claims, wherein the light control circuit is configured to go through, once coupled to the power supply, a response lag of 1-10 seconds during which the ambient brightness is detected and determined for enabling it to control the on/off status of the light control circuit correspondingly.

7. A light control circuit as claimed in claim 5, wherein the ambient brightness signal sampling and control circuit (4) is configured to operate in the turnon mode or intermediate mode thereby rendering the light control circuit to be turned on or remained on while the ambient brightness remains below a lower threshold for a specific duration.

8. A light control circuit as claimed in claim 5, wherein the ambient brightness signal sampling and control circuit (4) is configured to operate in the turnoff mode or intermediate mode thereby rendering the light control circuit to be turned off or to remain off while the ambient brightness remains above an upper threshold for a specific duration.

9. A light control circuit as claimed in claim 5, wherein the ambient brightness signal sampling and control circuit (4) is configured to keep the on/off status of the light control circuit unchanged while operating in the intermediate mode.

10. A light control circuit as claimed in claim 7 or claim 8, wherein the specific duration ranges from 3 to 30 seconds.

11. A light control fluorescent lamp, **characterized in that** it comprises a light control circuit as claimed in any one of claims 1-10.

12. A light control fluorescent lamp as claimed in claim 11, wherein the light control circuit is embedded therein.
